# EUROPEAN PATENT SPECIFICATION

(11) **EP 1 331 910 B1**
(45) Date of publication and mention of the grant of the patent: **09.03.2005**
(21) Application number: 01976988.4
(22) Date of filing: 16.10.2001
(51) Int. Cl.: A61F 9/08, G09B 21/00

(54) **SYSTEM FOR GUIDING A MOVEABLE CARRIER**
LEITSYSTEM FÜR EINEN BEWEGLICHEN TRÄGER
SYSTEME DESTINE A GUIDER UN SUPPORT MOBILE

(30) Priority: 16.10.2000 SE 0003753
(43) Date of publication of application: 06.08.2003
(73) Proprietor: Lindahl, Olof, 906 51 Umea (SE); Li, Haibo, 603 33 Umea (SE)
(72) Inventor: YAO, Zhengrong, 907 35 Umea (SE); Lindahl, Olof, 906 51 Umea (SE); Li, Haibo, 603 33 Umea (SE)
(74) Representative: Onn, Thorsten
(86) International application number: PCT/SE2001/002249
(87) International publication number: WO 2002/032355

(56) References cited:
- PATENT ABSTRACTS OF JAPAN vol. 200, no. 004 31 August 2000 & JP 2000 000263 A (TOYO COMMUN EQUIP CO LTD) 07 January 2000
- PATENT ABSTRACTS OF JAPAN vol. 199, no. 905 31 May 1999 & JP 11 032 250 A (NIPPON TELEGRAPH & TELEPH CORP) 02 February 1999
- GOOL L.V. ET AL.: 'Adventurous tourism for couch potatoes' COMPUTER ANALYSIS OF IMAGES AND PATTERNS, 8TH INTERNATIONAL CONFERENCE, CAIP'99, PROCEEDINGS 01 September 1999 - 03 September 1999, LJUBLJANA, SLOVENIA, pages 98 - 104, XP002905988

## Description

The present invention relates to a system for guiding a moveable carrier according to the introduction to claim 1.

It is a problem for those who cannot see or feel and cannot interpret the environment in which they wish to move forward.

For example, it is a problem for a person with impaired sight to on his or her own venture into a foreign or changing environment. Learning a regular walk or a regular route to a shop is a strenuous task. An accompanying colleague reports on what is passed by along the route, how the surroundings look, what and where the obstacles and dangers might be, recognition points to help localisation, etc. The person with impaired sight then walks the route according to his or her memory. New or moved obstacles must be localised with a white stick or a trained so-called guide dog.

JP 2 000000263 discloses a device with GPS and camera allowing the wireless exchange of guiding information with an assistant at a service centre.

It is the aim of the present invention to reduce or overcome the disadvantages stated above.

This aim is achieved with a system that is first mentioned above and that has the characteristics defined in the following claim 1.

The system for guiding a moveable carrier includes a device, borne by the carrier, for reproducing an image of at least the area in front of the carrier. A device for real-time analysis of the image information is connected to the device for reproducing the image, as is a device that achieves feedback to the carrier of instructions and/or information based on the said image analysis.

The device for real-time analysis of the image information can include a wireless connection link between the carrier and a service centre located at a distance where means of image analysis and the means of transmitting back the analysis result to the carrier can be arranged.

A monitor reproducing the image can be arranged at the said service centre for the manual study and analysis of images in real-time, and the device achieving feedback to the carrier can advantageously include a means of spoken feedback, ideally in both directions.

The device achieving feedback to the carrier can also include a means of tactile feedback.

The device for image reproduction can include a camera arranged to follow the head movements of a person carrying it.

The device for real-time analysis of the image information can include at least one image recording or storage of the route in question and the image recording can be provided with information or instructions about relevant positions along the route. Images from the device for reproducing the image of the area in front of the carrier can then be compared with the images from the stored image recording of the same route, and the system can thus adjust when and which instruction respectively information shall be passed on to the carrier.

In addition, a satellite navigation system can be arranged at the carrier and connected to the system to facilitate determining the actual position, which in turn facilitates the choice of a route from a library with stored routes, or the localisation of carriers who happen to be outside an area covered by a route in the library.

These and other characteristics and advantages of the invention will become evident from the following detailed description of preferred embodiments of the invention, which constitute examples and as such are thus not limiting for the scope of protection of the invention.

It should also be understood that a terminology adapted to the current embodiment is used to give a clear description in the text and that this terminology is not limiting for interpreting the claims.

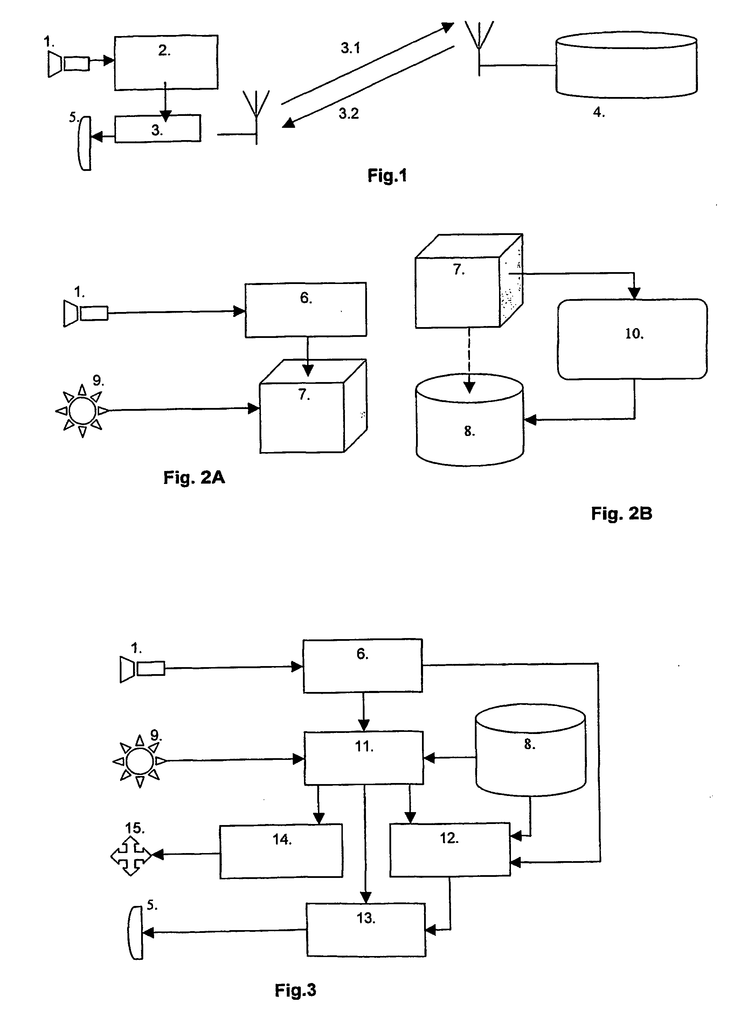

**Fig. 1** shows schematically a system according to a first embodiment of the current invention; **Figs. 2A** and **2B** show other embodiments of the current invention; and **Fig. 3** shows a third embodiment of the system according the current invention.

### Reference designations in the drawings:

1. Camera, video
2. Image coding system, video coding system
3. Wireless communication system
   3.1 Digital images, video
   3.2 instructions and information
4. Service centre
5. Loudspeaker and microphone
6. Digital video analysis
7. Route data
8. Library with routes
9. GPS receiver
10. Interactive route editor; information and instruction editing
11. Positional identification
12. Information and instruction generator
13. Speech synthesis
14. Directional simulator
15. Tactile compass

In a first embodiment of the current invention, see Fig. 1, a carrier, e.g. a person with impaired sight, is provided with at least one camera 1, e.g. a so-called CCD camera, that gives images of the surroundings of the person, at least the area in front of the person. Camera 1 is connected to a wireless communication system 3 via a portable video coding system 2. Through the communication system 3, digital video images 3.1 are transmitted via wireless communication to a service centre 4 for treatment/processing/analysis, and instructions or information are transmitted back and are fed to the carrier, here by means of loudspeaker 5, via communication system 3.2.

If the carrier wishes to use the system, the connection to the service centre 4 where the images from the camera 1 can be analysed is activated. The connection is preferably a connection over the standardised mobile telecommunications or data network and transfer of still or moving images can take place.

In addition, the connection is in both directions, whereby the carrier can receive instructions or information, e.g. orientation help, from the service centre through suitable feedback such as loudspeaker, earpiece, tactile information transfer, etc.

In one embodiment, the service centre 4 is manned. An operator answers the request call and, by observing the images through the feedback channel 3.2, can assist the carrier, e.g. if the person has become temporarily disoriented. With communication as well as image transfer in both directions, e.g. speech in both directions, the operator can provide precisely the instruction or information that the carrier requests at that moment. Examples of such information are orientation help in a shop, help in understanding a menu, the way to the nearest public convenience, etc.

In a second embodiment, see Fig. 2A, the carrier can also be provided with a satellite navigation system 9 that makes possible the simultaneous transfer of the actual position of the carrier to the service centre, plus the positional identity to the images captured by the camera during storage.

In a further embodiment, see Fig. 2B, the images from the camera of the carrier, with or without positional information, can be recorded 7, for example by storing the data, and provided with the voice of a speaker 10, whereby the stored route 8 can be utilised if the same route is to be followed again later. The speaker voice can be recorded in real-time if, for example, the operator in the service centre is connected or if the carrier on the occasion of recording is a sighted person, or the speaker voice can be edited in at a later date. The recording and storage can either be done at the carrier or via a wireless connection at the service centre. The storing of routes can advantageously be done in a special searchable library.

If the carrier is to walk from one specific position to another, one or more routes can be recalled from the library 8 and used to describe the way. If the carrier can manage to find a part of the way, the system can be activated when the need for assistance first arises.

When the system is activated, images from camera 1 are compared with images from the routes of the library 8 to identify the position of the carrier and the position along a suitable route. To facilitate the choice of the routes in the library 8 and to identify where the carrier is located along the route, a GPS satellite receiver 9 can be used or an operator at the service centre can help.

The system can also advantageously have, especially if the system is intended to be used without an operator connected, an image analysis system 6 that identifies and alerts the carrier about obstacles in his or her way. As is known, a cycle can one day be parked right in the middle of the pavement that the carrier uses. Through the identification of objects in front of the carrier, he or she can be warned and given the possibility of walking around the object. By arranging a camera 1 (it can be the camera named previously or a separate one) so that its direction follows the head movements of the carrier, the carrier can inspect the immediate area in different directions to locate obstacles and thereafter find a way around them. Feedback to the carrier can here take place via, for example, a synthesised voice through loudspeaker 5 or by means of tactile feedback 15.

As the type of image analysis needed for recognising obstacles is still relatively expensive, the obstacle-seeking function can, in a further embodiment, be performed by means of an active sensor, e.g. a laser-scanner or similar light or sound scanner that is arranged to work in the area immediately in front of the carrier.

In a special embodiment, a person with impaired sight who has a camera 1 mounted to follow head movements, e.g. a camera mounted on spectacle frames, can follow a specified route. Camera 1 registers the way and warns if an unexpected obstacle appears in front of the carrier. The images of the camera are compared with images from the route fetched from the route library 8. When image agreement with a sequence in the recorded route to which there is information or an instruction prevails, the carrier is provided with this in an appropriate manner. This can take place by, for example, a speaker voice and a loudspeaker 5 (e.g. earpiece) or through a tactile feedback 15. An example of a tactile feedback is a so-called tactile compass 15 that gives the carrier information about directions.

In the last embodiment, the library and/or the route can either be located in a memory storage unit carried by the carrier or at the service centre. If the route is at the service centre and the image comparison is performed there, it should be realised that an uninterrupted connection between the carrier and the service centre is required during the whole route. An alternative is that the route chosen in advance can be downloaded in whole or in part to a unit carried by the carrier.

The embodiments specified above have been exemplified with applications that support people with impaired sight. It should be realised that even people with unimpaired sight can have great use of the system, for example, during visits to unfamiliar towns or other unfamiliar environments. Other embodiments comprise applications within, for example, care of the elderly or care in the home where the carrier can initiate connection to a service centre when there is a real or perceived need for help so that the operator can, via images and sound, judge the situation and set in motion the correct measure, e.g. a security alarm.

In the embodiments above, it can also be arranged so that the operator can remotely control the carried device for image reproduction, e.g. by directing and/or zooming it.

## Claims

1. System for guiding a moveable carrier having a portable device (1) borne by the carrier for reproducing moving images of at least the area in front of the carrier, a device for analysing image information comprising a wireless communication link (3) between the carrier and a manned service centre (4) arranged some distance away, as well as a device achieving feedback of instructions and/or information to the carrier from the service centre based on the said images **characterised in that** means of recording (7) that can be activated are arranged to record images and the information/instructions (10) delivered, if any, and that the devices that can be activated are arranged to compare in real-time images from the image reproduction device with images from previous image recordings (8) of the same route for generating feedback of information/instructions.

2. System according to claim 1 **characterised in that** a device that recognises obstacles is arranged at the carrier for identifying obstacles in the path of the carrier.

3. System according to claim 2 **characterised in that** the device that recognises obstacles includes an image analysis system for identifying obstacles.

4. System according to claim 2 **characterised in that** the device that recognises obstacles includes an active sensor such as a laser-scanner or similar light or sound scanner for identifying obstacles.

5. System according to any of the previous claims **characterised in that** a monitor for reproducing images is arranged at the service centre for manual studying of the images in real-time and that the device for achieving feedback to the carrier includes a means of spoken feedback.

6. System according to any of the previous claims **characterised in that** the device for achieving feedback to the carrier includes a means of tactile feedback.

7. System according to any of the previous claims **characterised in that** the device for image reproduction includes a camera arranged to follow the head movements of the person having the carrier.

8. System according to any of the previous claims **characterised in that** the device for real-time analysis includes a route library with at least one recorded route plus means of comparing in real-time the current images with the images from the library to identify the correct route with information/instructions to the carrier.

9. System according to any of the previous claims **characterised in that** a satellite navigation system is arranged at the carrier and connected to the system for determining the actual position, facilitating the choice of route from a route library or localising carriers who find themselves outside of an area covered by the routes stored in the library.

10. System according to any of the previous claims **characterised in that** a means of remote control is arranged at the device for image reproduction, whereby the operator can control the device for image reproduction, e.g. in respect of direction and/or zoom.

## Patentansprüche

1. Leitsystem für einen beweglichen Träger mit einer vom Träger getragenen portablen Vorrichtung (1) zur Wiedergabe bewegter Bilder wenigstens des Bereichs vor dem Träger, einer Vorrichtung zur Analyse von Bildinformationen mit einer drahtlosen Verbindung (3) zwischen dem Träger und einem davon entfernten, bemannten Servicezentrum (4) sowie einer Vorrichtung zur Rückmeldung von Anweisungen und/oder Informationen vom Servicezentrum zum Träger auf der Basis der genannten Bilder, **dadurch gekennzeichnet, dass** aktivierbare Aufnahmemittel (7) vorhanden sind, welche das Speichern von Bildern sowie der gegebenenfalls erteilten Informationen/Anweisungen (10) gestatten, und dass die aktivierbaren Vorrichtungen einen Echtzeit-Vergleich von Bildern der Bildwiedergabevorrichtung mit Bildern früherer Bildaufnahmen (8) der gleichen Route gestatten, um eine Rückmeldung von Informationen/Anweisungen zu erzeugen.

2. System nach Anspruch 1, **dadurch gekennzeichnet, dass** am Träger eine Vorrichtung zur Erkennung von Hindernissen vorhanden ist, um Hindernisse im Weg des Trägers zu erkennen.

3. System nach Anspruch 2, **dadurch gekennzeichnet, dass** die Vorrichtung zur Erkennung von Hindernissen ein Bildanalysesystem zur Erkennung von Hindernissen aufweist.

4. System nach Anspruch 2, **dadurch gekennzeichnet, dass** die Vorrichtung zur Erkennung von Hindernissen einen aktiven Sensor zur Erkennung von Hindernissen aufweist, beispielsweise einen Laserscanner oder einen ähnlichen Licht- oder Tonscanner.

5. System nach einem der vorangehenden Ansprüche, **dadurch gekennzeichnet, dass** im Servicezentrum ein Monitor zur Wiedergabe von Bildern zur manuellen Untersuchung der Bilder in Echtzeit vorhanden ist, und dass die Vorrichtung zur Rückmeldung an den Träger ein Mittel für gesprochene Rückmeldungen beinhaltet.

6. System nach einem der vorangehenden Ansprüche, **dadurch gekennzeichnet, dass** die Vorrichtung zur Rückmeldung an den Träger ein Mittel für taktile Rückmeldungen beinhaltet.

7. System nach einem der vorangehenden Ansprüche, **dadurch gekennzeichnet, dass** die Bildwiedergabevorrichtung eine Kamera aufweist, welche den Kopfbewegungen der Person mit dem Träger folgen kann.

8. System nach einem der vorangehenden Ansprüche, **dadurch gekennzeichnet, dass** die Vorrichtung zur Echtzeitanalyse ein Routenarchiv mit mindestens einer aufgezeichneten Route sowie Mittel zum Echtzeit-Vergleich der momentanen Bilder mit Bildern aus dem Archiv aufweist, um dem Träger die richtige Route mit Informationen/Anweisungen anzugeben.

9. System nach einem der vorangehenden Ansprüche, **dadurch gekennzeichnet, dass** der Träger ein Satelliten-Navigationssystem aufweist, welches mit dem System verbunden ist, um die aktuelle Position zu bestimmen, die Auswahl einer Route aus einem Routenarchiv zu erleichtern oder um Träger zu lokalisieren, welche sich ausserhalb des Bereichs befinden, der von den im Archiv gespeicherten Routen abgedeckt wird.

10. System nach einem der vorangehenden Ansprüche, **dadurch gekennzeichnet, dass** die Bildwiedergabevorrichtung eine Fernsteuerung aufweist, mit der die Bedienperson die Bildwiedergabevorrichtung steuern kann, beispielsweise deren Richtung und/oder den Zoom.

## Revendications

1. Système de guidage d'un porteur mobile, comprenant un dispositif transportable (1 ) porté par le porteur pour la reproduction d'images en mouvement d'au moins de la zone en avant du porteur, un dispositif d'analyse des informations d'image comprenant une liaison de communication (3) sans fil entre le porteur et un centre de service (4) habité et éloigné du porteur, ainsi qu'un dispositif permettant le retour d'instructions et/ou d'informations au porteur depuis le centre de service sur la base desdites images, **caractérisé en ce que** des moyens d'enregistrement (7) pouvant être activés sont agencés pour permettre d'enregistrer des images et les informations/instructions (10) fournies, le cas échéant, et **en ce que** les dispositifs pouvant être activés sont agencés pour permettre de comparer en temps réel des images provenant du dispositif de reproduction d'images à des images d'enregistrements (8) antérieurs du même itinéraire pour générer un retour d'informations/instructions.

2. Système selon la revendication 1, **caractérisé en ce que** le porteur est muni d'un dispositif de reconnaissance d'obstacles pour identifier des obstacles sur le chemin du porteur.

3. Système selon la revendication 2, **caractérisé en ce que** le dispositif de reconnaissance d'obstacles comprend un système d'analyse d'images pour identifier des obstacles.

4. Système selon la revendication 2, **caractérisé en ce que** le dispositif de reconnaissance d'obstacles comprend un capteur actif tel qu'un scanner à laser ou un scanner similaire de lumière ou de sons pour identifier des obstacles.

5. Système selon l'une quelconque des revendications précédentes, **caractérisé en ce que** le centre de service est équipé d'un moniteur pour la reproduction d'images permettant l'examen manuel des images en temps réel, et que le dispositif de retour d'information au porteur comprend un moyen de retour d'information oral.

6. Système selon l'une quelconque des revendications précédentes, **caractérisé en ce que** le dispositif de retour d'information au porteur comprend un moyen de retour d'information tactil.

7. Système selon l'une quelconque des revendications précédentes, **caractérisé en ce que** le dispositif de reproduction d'images comprend une caméra adaptée à suivre les mouvements de tête de la personne munie du porteur.

8. Système selon l'une quelconque des revendications précédentes, **caractérisé en ce que** le dispositif d'analyse en temps réel comprend un répertoire d'itinéraires dans lequel est enregistré au moins un itinéraire, ainsi que des moyens permettant de comparer en temps réel les images momentanés aux images en provenance du répertoire afin d'identifier l'itinéraire correct avec des informations/instructions au porteur.

9. Système selon l'une quelconque des revendications précédentes, **caractérisé en ce que** le porteur est muni d'un système de navigation par satellite qui est relié au système afin de déterminer la position actuelle, de sorte à faciliter le choix d'un itinéraire dans un répertoire d'itinéraires ou à repérer des porteurs qui se trouvent à l'extérieur du domaine couvert par les itinéraires enregistrés dans le répertoire.

10. Système selon l'une quelconque des revendications précédentes, **caractérisé en ce que** le dispositif de reproduction d'images est muni d'un moyen de commande à distance, permettant à l'opérateur de commander le dispositif de reproduction d'images, par exemple en ce qui concerne la direction et/ou le zoom.
